# EUROPEAN PATENT APPLICATION

(11) **EP 3 854 948 A1**
(43) Date of publication of application: **28.07.2021**
(21) Application number: 20155695.8
(22) Date of filing: 05.02.2020
(51) Int. Cl.: E03C 1/04

(54) **SINGLE-HAND OPERATED FAUCET**

(30) Priority: 27.01.2020 IL 27228820
(71) Applicant: Hamat Sanitary Fittings and Castings Ltd., 7716401 Ashdod (IL)
(72) Inventor: PIRUTIN, Shlomo, 7770033 Ashdod (IL)
(74) Representative: adares Patent- und Rechtsanwälte Reininger & Partner GmbB

(57) **Abstract**

Disclosed herein is a faucet (100) including a housing (105), inlet port (111) and outlet ports (104) associated with the housing (100), a faucet cartridge (125) having hot and cold water inlets for receiving respective flows of hot and cold water through the inlet port (111), a mixed water outlet (132), and a mixing chamber (130) disposed between the hot and cold water inlets and the mixed water outlet (132) for liquid flow communication therebetween, a flow guide (150) connected to the mixed water outlet (132) of the faucet cartridge (125), for guiding an outflow of mixed water therefrom to the outlet port (104) so as to prevent the outflow of water from contacting the housing (100), and a sealing element (157) configured to create a sealed interface between the faucet cartridge (125) and the flow guide (150) so as to prevent leakage.

## Description

### FIELD OF THE INVENTION

The present disclosure generally relates to faucets.

### BACKGROUND

A faucet or tap is an exposed plumbing fitting which provides an outflow of a liquid, usually water, allowing a user to control the rate and temperature of the outflow. The faucet receives water via water hoses, such as a hot water hose and a cold water hose. The hot and cold water can be mixed to produce a mixed water outflow from an outlet port of the faucet, at a desired temperature. The faucet has a control mechanism, for example, a handle or a knob, that allows the user to control the flow rate and temperature of the water outflow. Some faucets are provided with an extendable or retractable spout that allows the user to adjust the position of the spout and to direct the outflow to a desired location.

### SUMMARY

The following embodiments and aspects thereof are described and illustrated in conjunction with systems, tools and methods which are meant to be exemplary and illustrative, not limiting in scope.

There is provided, in accordance with an embodiment, a faucet including a housing, inlet and outlet ports associated with the housing, a faucet cartridge having hot and cold water inlets for receiving respective flows of hot and cold water through the inlet port, a mixed water outlet, and a mixing chamber disposed between the hot and cold water inlets and the mixed water outlet for liquid flow communication therebetween; a flow guide connected to the mixed water outlet of the faucet cartridge, for guiding an outflow of water therefrom to the outlet port so as to prevent the outflow of water from contacting the housing, and a sealing element configured to create a sealed interface between the faucet cartridge and the flow guide so as to prevent leakage.

In certain embodiments, the flow guide has a mixed water inlet for directing water from the mixed water outlet into a mixed water conduit of the flow guide.

In certain embodiments, the flow guide includes a groove formed on an exterior surface of the flow guide for seating the sealing element about the flow guide inlet in a sealing relationship therewith, thereby to create the sealed interface.

In certain embodiments, the sealing element is operative to prevent the outflow of water from coming into heat exchange contact with the housing.

In certain embodiments, the faucet cartridge includes a flow mechanism having an on-off valve operative to facilitate controlling a flow rate of the outflow, and a temperature control element operative to facilitate regulation of the temperature of the outflow by modifying the relative volumes of hot and cold water received in the mixing chamber.

In certain embodiments, the housing is configured to be gripped between a palm and fingers of a single hand of a user, and the flow control mechanism is positioned along a top surface of the faucet housing to facilitate operation of the on-off valve and the rotating element with a digit of a user hand holding the faucet casing.

In certain embodiments, the flow control mechanism is arranged an opposite end of the faucet housing from the faucet outlet.

In certain embodiments, the faucet further includes a spray control mechanism operative to control a spray of the outflow from the faucet outlet.

In certain embodiments, the spray control mechanism is arranged along a side surface of the faucet housing to facilitate operation with the user hand holding the faucet casing.

In certain embodiments, the outlet flow guide includes hot and cold water inlet conduits associated with the hot and cold water inlets of the faucet cartridge, for an inflow of hot and cold water.

In certain embodiments, the flows of hot and cold are provided through hot and cold water inlet hoses extending through the conduits, connected to the hot and cold water inlets of the faucet cartridge.

There is further provided, in accordance with an embodiment, a flow guide associated with a faucet, the flow guide including hot and cold water inlet conduits facilitating extension of hot and water hoses therethrough and associated with hot and cold water inlets of a faucet cartridge, and a mixed water conduit for directing an outflow from a mixed water outlet of the faucet cartridge to an outlet port of a faucet so as to prevent the outflow from contacting a hosing of the faucet.

In certain embodiments, the flow guide further includes one or more sealing elements seated onto an outflow guide inlet to provide a sealing interface between the outflow guide inlet and the mixed water outlet, the sealing element seated in a groove of the outflow guide inlet.

There is further provided, in accordance with an embodiment, a faucet including a housing configured to be gripped between a palm and fingers of a single hand of a user, inlet and outlet ports associated with the housing, the outlet port provided at a bottom portion of the housing, a flow control mechanism configured to control a flow and temperature of the mixed water outflow, the flow control mechanism is positioned along a top surface of the faucet housing to facilitate operation of the flow control mechanism with a digit of the single hand, and a spray control mechanism positioned along a side wall of the housing and configured to facilitate changing a spray of the mixed water outflow from the outlet port.

In certain embodiments, the inlet ports provide hot and cold water flows for mixing within the housing and provide a mixed water outflow from the outlet port, the flow control mechanism includes an on-off valve operative to facilitate controlling a flow rate of the outflow, and a temperature control element operative to facilitate regulating a temperature of the outflow by modifying the relative volumes of hot and cold water mixed to produce the mixed water outflow.

In certain embodiments, the faucet further includes a faucet cartridge having hot and cold water inlets for receiving respective flows of hot and cold water through the inlet port, a mixed water outlet, and a mixing chamber disposed between the hot and cold water inlets and the mixed water outlet, and an outlet flow guide connected to the mixed water outlet of the faucet cartridge, for guiding an outflow therefrom to the outlet port so as to prevent the outflow from contacting the housing.

In addition to the exemplary aspects and embodiments described above, further aspects and embodiments will become apparent by reference to the figures and by study of the following detailed description.

### BRIEF DESCRIPTION OF THE DRAWINGS

Some non-limiting exemplary embodiments or features of the disclosed subject matter are illustrated in the following drawings.

Identical, duplicate, equivalent or similar structures, elements or parts that appear in one or more drawings are generally labeled with the same reference numeral, optionally with an additional letter or letters to distinguish between similar entities or variants of entities, and may not be repeatedly labeled and/or described.

Dimensions of components and features shown in the figures are chosen for convenience or clarity of presentation and are not necessarily shown to scale or true perspective. For convenience or clarity, some elements or structures are not shown or are shown only partially and/or from different perspectives.

References to previously presented elements are implied without necessarily further citing the drawing or description in which they appear.
Fig. 1 is a schematic illustration of a faucet, according to certain embodiments;
Fig. 2 shows operation of the faucet of Fig. 1;
Fig. 3 is a schematic side-sectional illustration of the faucet of Fig. 1, according to certain embodiments;
Fig. 4 is a schematic illustration of a faucet cartridge in communication with a flow guide, according to certain embodiments;
Figs. 5A-5B are views of the faucet cartridge of Fig. 4, according to certain embodiments;
Figs. 6A-6D are views of the flow guide, according to certain embodiments; and
Fig. 7 is a schematic illustration of a sealing element of the faucet of Fig. 1, according to certain embodiments.

### DETAILED DESCRIPTION

Disclosed herein is a faucet for operation by a single hand of a user, according to certain embodiments.

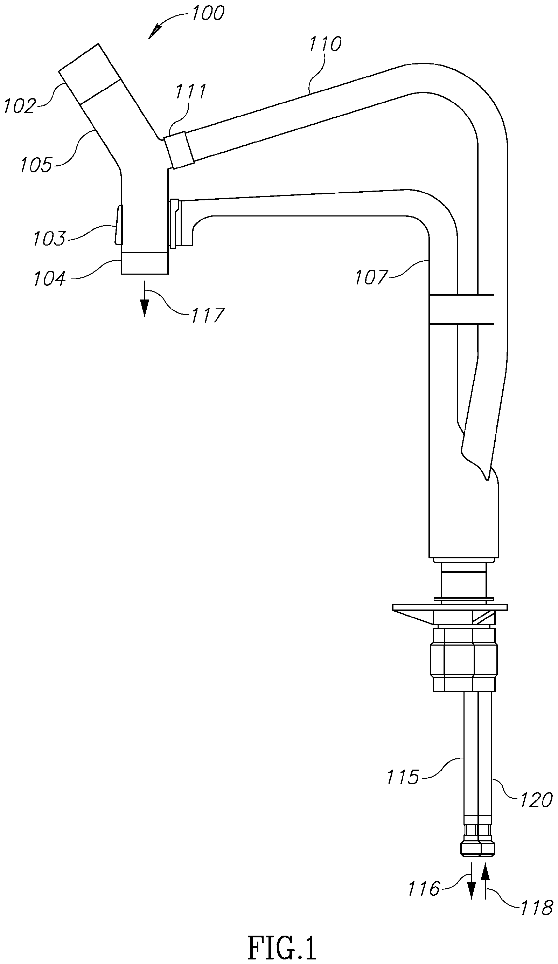

According to certain embodiments, Fig. 1 schematically illustrates a faucet 100 having a housing 105, an inlet port 111 and an outlet port 104. Housing 105 is configured and contoured to enable gripping of housing 105 between a palm and fingers of a single hand of a user, thereby facilitating one handed operation of faucet 100. Water hoses, such as hot water hose 115 and cold water hose 120, supply hot and cold water, respectively, to faucet 100 via inlet port 111. A hot water flow is indicated schematically by arrow 116, and a cold water flow is indicated schematically by arrow 121. Hot water hose 115 and cold water hose 120 extend through a hose conduit 110 to inlet port 111 so as to supply thereto hot and cold water from a suitable water supply (not shown). Hot water hose 115, cold water hose 120 and hose conduit 110 are flexible, so as to facilitate free range motion of faucet 100 and direction by a user of an outflow from faucet 100 to a desired location and/or target.

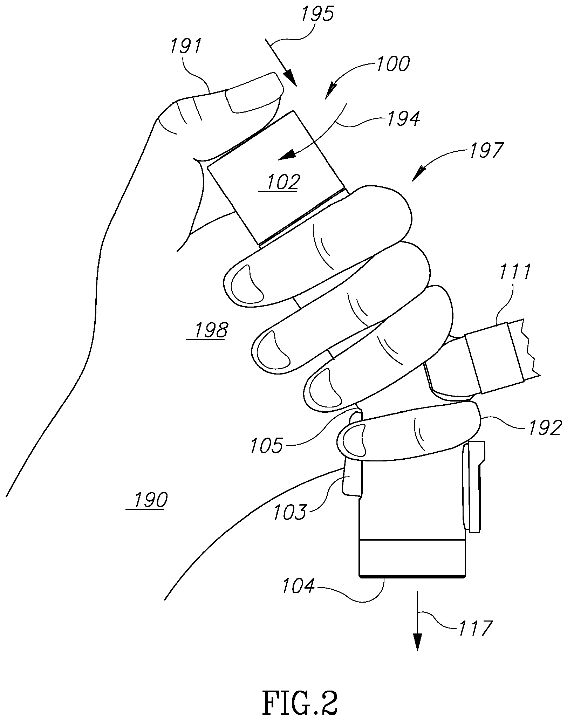

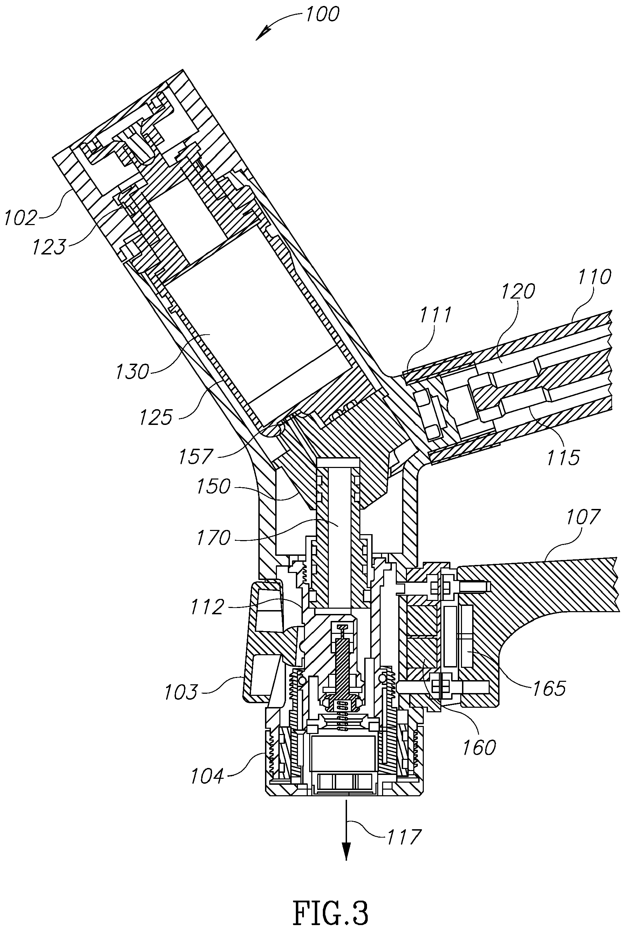

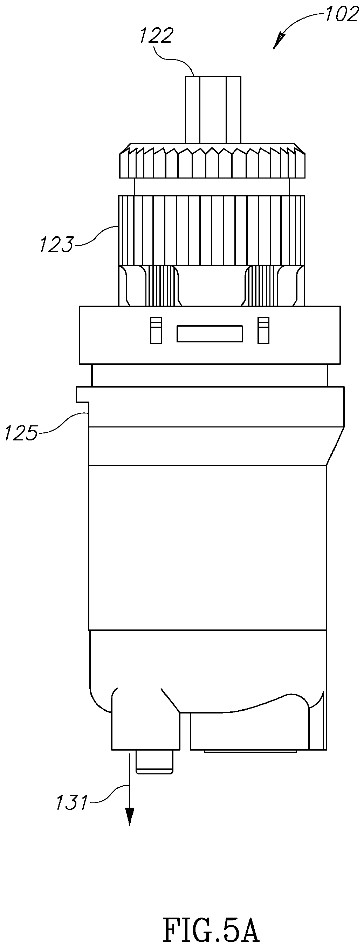

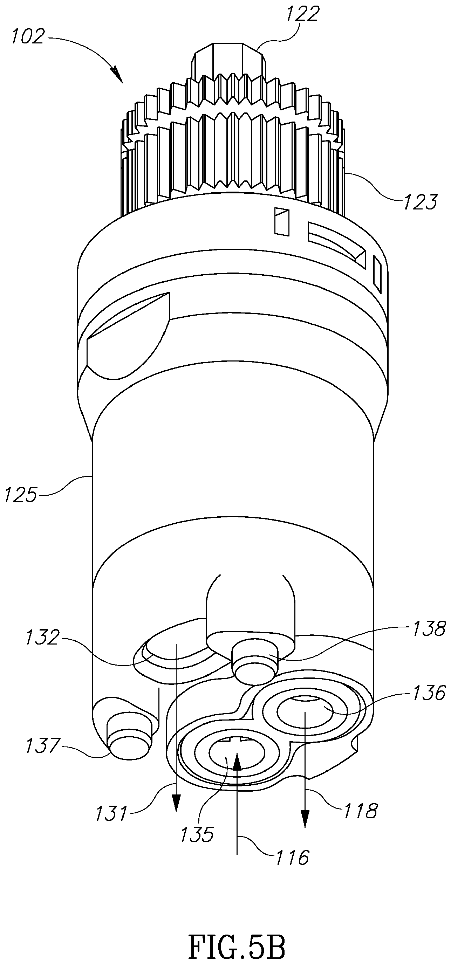

Described in conjunction with Fig. 2, faucet 100 includes a flow control mechanism 102 which controls both the rate of flow and the temperature of a mixed water outflow, indicated schematically by arrow 117, through outlet port 104. Housing 105 is illustrated as being conveniently gripped between a palm 198 and fingers, referenced generally as 197. Flow control mechanism 102 may be positioned at the top end of housing 105 to facilitate operation of flow control mechanism 102 with a single digit of hand 190, such as a thumb 191. For example, flow control mechanism 102 can be pressed, as shown by arrow 195, to produce outflow 117. In certain embodiments, flow control mechanism 102 can be pressed such that greater force applied to flow control mechanism 102 produces a higher flow rate. Flow control mechanism 102 can be rotated, such as in a direction shown by arrow 194, thereby modifying the temperature of mixed water outflow 117 by modifying the volume of hot and cold water mixed together to produce 131 (Fig. 5A-5B) as further disclosed herein with reference to Figs. 3, 5A and 5B. Faucet 100 can also include a spray control mechanism 103 configured to facilitate controlling a spray modifier 112 (Fig. 3) so to modify the dispersal of mixed water outflow 117, for example from a single stream to a spray dispersal. Spray control mechanism 103 can be positioned along a side wall of housing 105 thereby facilitating operation of spray control mechanism 103 with a digit 192, such as a ring finger, of hand 190. In certain embodiments, faucet 100 can include a metal plate 160 (Fig. 1) to facilitate its connection to a magnetic holder 107 having a magnet 165, when faucet 100 is not in use.

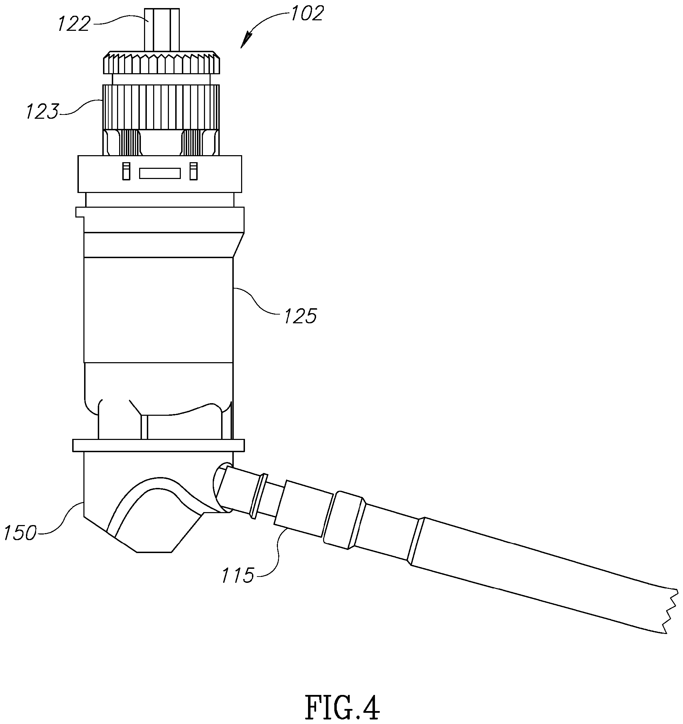

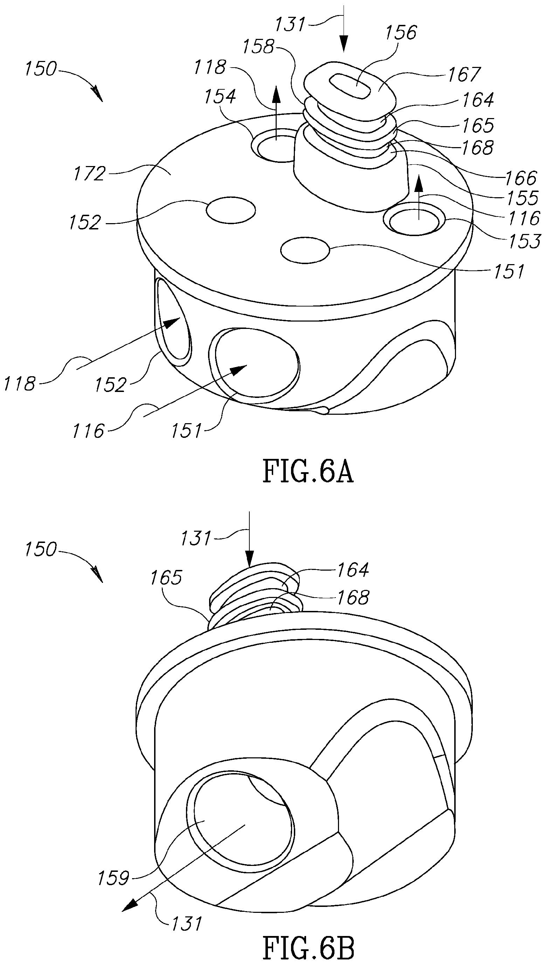

Reference is made to Fig. 3, in which faucet 100 is seen to be cut-away so as to reveal its inner components which include a faucet cartridge 125 (seen also in Figs. 4-5B), a flow guide 150 (seen also in Figs. 4, 6A and 6B), one or more sealing elements 157 (seen also in Figs. 6A-7) and a spray modifier 112. In faucet 100, faucet cartridge 125, flow guide 150 and spray modifier 112 are seen to be arranged in mutual fluid flow communication and positioned within housing 105 to facilitate the flow of water therethrough. Faucet cartridge 125 includes a mixing chamber 130 configured for mixing hot and cold water so as to provide a mixed temperature water flow which is dispensed through outflow port 104 as mixed water outflow 117. Mixing chamber 130 includes a hot water inlet 135 (Fig. 5B) and a cold water inlet 136 (Fig. 5B) that are connected to hot water hose 115 and cold water hose 120 thereby enabling hot water 116 (Fig. 1) and cold water 118 (Fig. 1) to access mixing chamber 130. Faucet cartridge 125 can incorporate flow control mechanism 102 thereby controlling the flow of enabling hot water 116 and cold water 118 into mixing chamber 130 and to control the temperature of mixed water 131 (Fig. 5A). One example of a suitable, commercially available faucet cartridge is the KEROX K-28 Ceramic Mixing Cartridge of Kerox Ltd., Hungary.

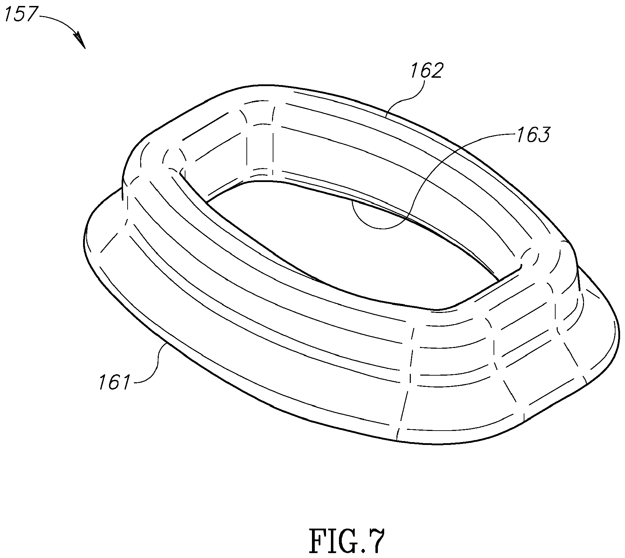

Faucet cartridge 125 includes a mixed water outlet 132 which mixed water flows out of mixing chamber 130 into outflow guide 150, which directs mixed water 131 in the direction of outlet port 104. Outflow guide 150 includes one or more sealing elements 157, described below in detail in conjunction with Fig. 7, to seal the connection between faucet cartridge 125 and outflow guide 150 and thereby prevent outflow of water from contacting housing 105. Sealing of the connection via sealing element 157 thereby preventing the outflow of mixed water 131 from contacting housing 105 thereby preventing injury to user 190 (Fig.2) when operating Faucet 100 with hot water, without requiring an insulating layer within housing 105.

Fig. 4 schematically illustrates faucet cartridge 125 when connected to and in fluid flow communication with flow guide 150 and tubes 115 and 120 (not shown), according to certain embodiments.

Figs. 5A-5B schematically illustrates faucet cartridge 125 according to certain embodiments. Faucet cartridge 125 includes a cold water inlet 135 and a hot water inlet 136 to receive cold water and hot water from cold water tube 116 (Fig. 3) and hot water tube 118 (Fig. 3) respectively. The cold water and hot water enter mixing chamber 130 (Fig. 3) via cold water inlet 135 and hot water inlet 136. The hot and cold water mix in mixing chamber 130 to produce a mixed water 131 at a desired temperature, which can then flow out of mixing chamber 130 through a mixed water outlet 132. Faucet cartridge 125 includes flow control mechanism 102 thereby controlling the flow and temperature of the mixed water outflow through mixed water outlet 132.

Flow control mechanism 102 includes a flow control 122, for example, an on-off valve, configured to control the flow of water from faucet 100, for example, by one or more valves (not shown) positioned at the opening of cold and hot water inlets 135, 136 and/or of mixed water outlet 132. Flow control mechanism 102 further includes a temperature control 123 configured to control a temperature of the mixed water outflow 117 by modifying the relative volumes of the hot and cold water 116, 121 flowing through and mixed in mixing chamber 130 thereby producing the mixed water outflow 117. Temperature control 123 can shift a rocker (not shown) arranged between cold and hot water inlets 135, 136. Rotation of temperature control 123 results in aligning the rocker to seal and/or open hot and cold water inlets 135, 136 thereby controlling the amount of hot and cold water flowing into mixing chamber 130 and achieving a desired temperature of mixed water flowing 117.The above-described flow control valves and temperature control mechanism are substantially as known in the art, for example, as may be found at https://www.hunker.com/12155798/how-does-a-cartridge-faucet-work and http://starcraftcustombuilders.com/sources.faucets1b.htm, and are therefore not detailed herein.

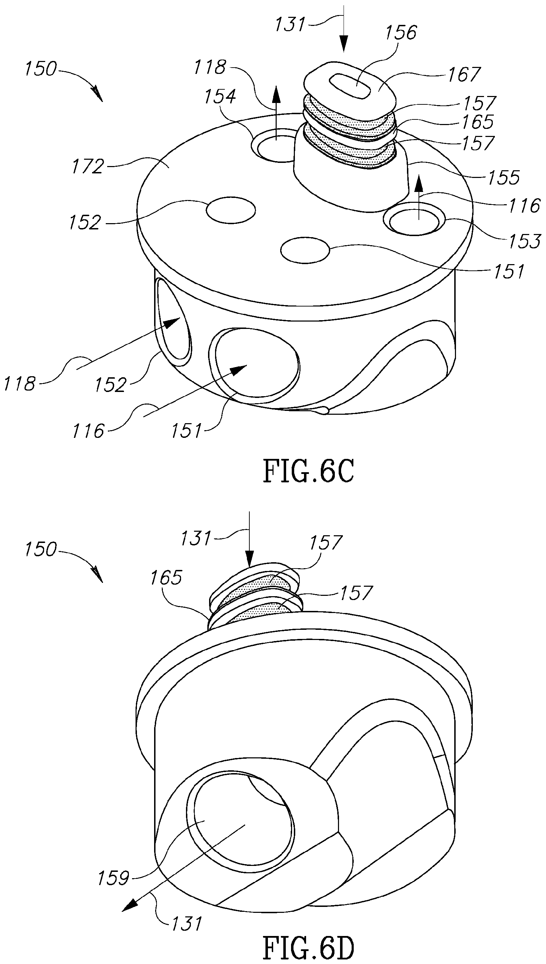

Figs. 6A-6B schematically illustrate flow guide 150 (also in Fig. 3) having a mixed water conduit inlet 155 for directing mixed water outflow 117 (Fig. 1) from mixed water outlet 132 (Fig. 5B) into a mixed water conduit 159 of flow guide 150. Mixed water conduit inlet 156 connects to a conduit outlet 159 through which mixed water 117 flows out of flow guide 150 directed towards outlet port 104 (Fig. 1). Flow guide 150 can include a hot water conduit 151 and a cold water conduit 152 operative to supply hot water 116 and cold water 118 to faucet cartridge 125 (Figs. 3, 5A-5B), for example, by guiding hot water hose 115 (Fig. 1) and cold water hose 120 (Fig. 1) respectively to hot water inlet 135 (Fig. 5B) and cold water inlet 136 (Fig. 5B) of faucet cartridge 125. Mixed water conduit 155 protrudes from a top surface 172 of flow guide 150 thereby enabling insertion of mixed water inlet 155 into mixed water outlet 132. Mixed water conduit 155 includes one or more grooves 164, 168 along an exterior surface of mixed water conduit 155 for positioning one or more sealing elements 157 (Figs. 3 and 7) thereon, as described below in conjunction with Figs. 6C and 6D.

Referring now to Figs. 6C and 6D, it is seen that sealing elements 157 are seated within grooves 164 and 168 so as to seal the connection between mixed water outlet 132 and mixed water inlet 155. This is effective to prevent mixed water 131 (Fig 5A) from coming into heat exchange contact with housing 105 (Fig. 1) thereby preventing hand 190 (Fig. 2) from being scalded by a potentially high temperature of mixed water 131. In certain embodiments one or more sealing elements 157 (Figs. 3, 7) can be positioned along outflow conduit inlet 322. Flow guide 150 can include connection ports, referenced generally as 153 and 154, into which connectors 137, 138 (Fig. 5B) are inserted to facilitate connection of flow guide 150 to faucet cartridge 125 thereby preventing flow guide 150 and faucet cartridge 125 from disconnecting due to pressure of mixed water outflow 117 passing from faucet cartridge 125 to flow guide 150. In certain embodiments, conduit outlet 159 is configured with a diameter enabling insertion therein of an inlet 170 (Fig. 3) of spray modifier 112 (Fig 2). Mixed water conduit 155 includes inlet lip 167, groove base 165 and groove base 166, which prevent sealing elements 157 from disconnecting from flow guide 150 when mixed water conduit 155 is disconnected from mixed water outlet 132.

Referring to Fig. 7, sealing element 157 can be ring-shaped in order to fit within groove 164 or 165 (Fig. 6A). Sealing element 157 can include a wide lip 161 to fit sealing element 157 onto groove base 165 (Fig. 6A) or groove base 166 (Fig. 6A) and to seal the passage between mixed water outlet 132 and outflow conduit inlet 156.

In the context of some embodiments of the present disclosure, by way of example and without limiting, terms such as 'operating' or 'executing' imply also capabilities, such as 'operable' or 'executable', respectively. Conjugated terms such as, by way of example, 'a thing property' implies a property of the thing, unless otherwise clearly evident from the context thereof.

The corresponding structures, materials, acts, and equivalents of all means or step plus function elements in the claims below are intended to include any structure, material, or act for performing the function in combination with other claimed elements as specifically claimed. As used herein, the singular forms "a", "an" and "the" are intended to include the plural forms as well, unless the context clearly indicates otherwise. It will be further understood that the terms "includes", "including", "comprises" and/or "comprising" and/or "having" when used in this specification, specify the presence of stated features, integers, steps, operations, elements, and/or components, but do not preclude the presence or addition of one or more other features, integers, steps, operations, elements, components, and/or groups thereof. As used herein the term "configuring" and/or 'adapting' for an objective, or a variation thereof, implies using materials and/or components in a manner designed for and/or implemented and/or operable or operative to achieve the objective. Unless otherwise specified, the terms 'about' and/or 'close' with respect to a magnitude or a numerical value implies within an inclusive range of -10% to +10% of the respective magnitude or value.

Unless otherwise specified, the terms 'about' and/or 'close' with respect to a dimension or extent, such as length, implies within an inclusive range of -10% to +10% of the respective dimension or extent. Unless otherwise specified, the terms 'about' or 'close' imply at or in a region of, or close to a location or a part of an object relative to other parts or regions of the object. When a range of values is recited, it is merely for convenience or brevity and includes all the possible sub-ranges as well as individual numerical values within and about the boundary of that range. Any numeric value, unless otherwise specified, includes also practical close values enabling an embodiment or a method, and integral values do not exclude fractional values. A sub-range values and practical close values should be considered as specifically disclosed values. As used herein, ellipsis (...) between two entities or values denotes an inclusive range of entities or values, respectively. For example, A...Z implies all the letters from A to Z, inclusively.

The terminology used herein should not be understood as limiting, unless otherwise specified, and is for the purpose of describing particular embodiments only and is not intended to be limiting of the disclosed subject matter. While certain embodiments of the disclosed subject matter have been illustrated and described, it will be clear that the disclosure is not limited to the embodiments described herein. Numerous modifications, changes, variations, substitutions and equivalents are not precluded. Terms in the claims that follow should be interpreted, without limiting, as characterized or described in the specification.

## Claims

1. A faucet comprising:
a housing;
inlet and outlet ports associated with said housing;
a faucet cartridge having hot and cold water inlets for receiving respective flows of hot and cold water through said inlet port, a mixed water outlet, and a mixing chamber disposed between said hot and cold water inlets and said mixed water outlet for liquid flow communication therebetween; a flow guide connected to said mixed water outlet of said faucet cartridge, for guiding an outflow of water therefrom to said outlet port so as to prevent the outflow of water from contacting said housing; and,
a sealing element configured to create a sealed interface between the faucet cartridge and said flow guide so as to prevent leakage.

2. A faucet according any of the preceding claims, wherein said flow guide has a mixed water inlet for directing water from said mixed water outlet into a mixed water conduit of said flow guide.

3. A faucet according to claim 1, wherein said flow guide comprises a groove formed on an exterior surface of said flow guide for seating said sealing element about said flow guide inlet in a sealing relationship therewith, thereby to create said sealed interface.

4. A faucet according to any of the preceding claims, wherein said sealing element is operative to prevent the outflow of water from coming into heat exchange contact with said housing.

5. A faucet according to any of the preceding claims, wherein said faucet cartridge comprises a flow mechanism having:
an on-off valve operative to facilitate controlling a flow rate of said outflow; and,
a temperature control element operative to facilitate regulation of the temperature of the outflow by modifying the relative volumes of hot and cold water received in said mixing chamber.

6. A faucet according to claim 5, wherein
said housing is configured to be gripped between a palm and fingers of a single hand of a user;
said flow control mechanism is positioned along a top surface of said faucet housing to facilitate operation of said on-off valve and said rotating element with a digit of a user hand holding the faucet casing.

7. A faucet according to any of the preceding claims, wherein said flow control mechanism is arranged an opposite end of said faucet housing from said faucet outlet.

8. A faucet according to any of the preceding claims, further comprising a spray control mechanism operative to control a spray of the outflow from the faucet outlet.

9. A faucet according to claim 8, wherein said spray control mechanism is arranged along a side surface of the faucet housing to facilitate operation with the user hand holding the faucet casing.

10. A faucet according to any of the preceding claims, wherein said outlet flow guide comprises hot and cold water inlet conduits associated with said hot and cold water inlets of said faucet cartridge, for an inflow of hot and cold water.

11. A faucet according to claim 10, wherein said flows of hot and cold are provided through hot and cold water inlet hoses extending through said conduits, connected to said hot and cold water inlets of said faucet cartridge.

12. A flow guide associated with a faucet, said flow guide comprising:
hot and cold water inlet conduits facilitating extension of hot and water hoses therethrough and associated with hot and cold water inlets of a faucet cartridge; and,
a mixed water conduit for directing an outflow from a mixed water outlet of said faucet cartridge to an outlet port of a faucet so as to prevent said outflow from contacting a hosing of said faucet.

13. An outflow guide according to claim 12, further comprising:
sealing element seated onto an outflow guide inlet to provide a sealing interface between said outflow guide inlet and said mixed water outlet, said sealing element seated in a groove of said outflow guide inlet.

14. A faucet comprising:
a housing configured to be gripped between a palm and fingers of a single hand of a user;
inlet and outlet ports associated with said housing;
said outlet port provided at a bottom portion of said housing;
a flow control mechanism configured to control a flow and temperature of said mixed water outflow, said flow control mechanism is positioned along a top surface of said faucet housing to facilitate operation of said flow control mechanism with a digit of the single hand; and,
a spray control mechanism positioned along a side wall of said housing and configured to facilitate changing a spray of the mixed water outflow from said outlet port.

15. A faucet according to claim 14, wherein
said inlet ports providing a hot and cold water flows for mixing within said housing and providing a mixed water outflow from said outlet port;
said flow control mechanism comprises:
an on-off valve operative to facilitate controlling a flow rate of said outflow; and,
a temperature control element operative to facilitate regulating a temperature of said outflow by modifying the relative volumes of hot and cold water mixed to produce said mixed water outflow.
